(19) Europäisches Patentamt
European Patent Office
Office européen des brevets

(11) **EP 4 329 139 A1**

(12) **EUROPÄISCHE PATENTANMELDUNG**

(43) Veröffentlichungstag:
**28.02.2024 Patentblatt 2024/09**

(21) Anmeldenummer: 23183257.7

(22) Anmeldetag: **04.07.2023**

(51) Internationale Patentklassifikation (IPC):
*H02J 7/00* (2006.01)

(52) Gemeinsame Patentklassifikation (CPC):
**H02J 7/0013; H02J 7/007**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **13.07.2022 DE 102022117480**

(71) Anmelder: **STILL GmbH
22113 Hamburg (DE)**

(72) Erfinder:
• **WILKEN, Hauke
22159 Hamburg (DE)**
• **KARAKURT, Bahattin
22119 Hamburg (DE)**

(74) Vertreter: **Patentship Patentanwaltgesellschaft
Schertlinstraße 29
86159 Augsburg (DE)**

(54) **VORRICHTUNG ZUM STEUERN EINER VIELZAHL VON BATTERIE-AUFLADEEINRICHTUNGEN**

(57) Die Erfindung betrifft eine Vorrichtung (110) sowie ein Verfahren zum Steuern einer Vielzahl von Aufladeeinrichtungen (120a-d) mit einer Vielzahl von ersten Aufladeeinrichtungen (120a,b) zum Aufladen einer Vielzahl von aufladbaren Lithiumbatterien und einer Vielzahl von zweiten Aufladeeinrichtungen (120c,d) zum Aufladen einer Vielzahl von aufladbaren Bleibatterien. Die Vorrichtung (110) umfasst eine Kommunikationsschnittstelle (113), welche ausgebildet ist, von jeder mit einer jeweiligen Batterie elektrisch verbundenen Aufladeeinrichtung (120a-d) über eine jeweilige Datenverbindung Statusinformationen über einen Aufladestatus der Aufladeeinrichtung (120a-d) zu empfangen. Ferner umfasst die Vorrichtung (110) eine Prozessoreinrichtung (111), welche ausgebildet ist, Steuerungsdaten für die Vielzahl von Aufladeeinrichtungen (120a-d) zu generieren, wobei die Steuerungsdaten ausgebildet sind, den Aufladevorgang einer jeweiligen Aufladeeinrichtung (120a-d) zu steuern. Dabei ist die Prozessoreinrichtung (111) ausgebildet, die Steuerungsdaten für die Vielzahl von ersten Aufladeeinrichtungen (120a,b) auf der Grundlage der Statusinformationen der Vielzahl von zweiten Aufladeeinrichtungen (120c,d) zu generieren. Die Kommunikationsschnittstelle (113) ist ferner ausgebildet, die Steuerungsdaten an die Vielzahl von Aufladeeinrichtungen (120a-d) zu übertragen.

Fig. 1

**Beschreibung**

Die Erfindung betrifft eine Vorrichtung und ein Verfahren zum Steuern einer Vielzahl von Aufladeeinrichtungen zum Aufladen einer Vielzahl von aufladbaren Batterien, insbesondere einer Vielzahl von aufladbaren Batterien zum Antreiben einer Vielzahl von Flurförderzeugen.

Für den Transport und die Lagerung von Produkten, Waren und Materialien werden oftmals Ladungsträger, beispielsweise Gitterboxen oder Paletten, insbesondere Europaletten verwendet. Zur Handhabung derartiger Ladungsträger z.B. in der Intralogistik, d.h. dem innerbetrieblichen Materialfluss, z.B. in einem Warenlager, werden in der Regel teilweise automatisierte Flurförderzeuge, z.B. Gabelstapler, Industrieroboter und dergleichen eingesetzt. Derartige Flurförderzeuge werden häufig durch elektrische Batterien angetrieben, die an Ladestationen wieder elektrisch aufgeladen werden müssen. Dabei sind in der Vergangenheit vermehrt Bleibatterien und in letzter Zeit immer mehr Lithiumbatterien zum Einsatz gekommen.

Der vorliegenden Erfindung liegt die Aufgabe zugrunde, eine Vorrichtung und ein Verfahren zum Steuern einer Vielzahl von Aufladeeinrichtungen mit einer Vielzahl von ersten Aufladeeinrichtungen zum Aufladen einer Vielzahl von aufladbaren Lithiumbatterien (im Folgenden auch LIB für "Li-Ion Battery") und einer Vielzahl von zweiten Aufladeeinrichtungen zum Aufladen einer Vielzahl von aufladbaren Bleibatterien (im Folgenden auch LAB für "Lead-Acid Battery"; im Deutschen auch als Blei-Säure-Batterie oder Pb-Batterie bezeichnet) bereitzustellen.

Diese Aufgabe wird gemäß einem ersten Aspekt der Erfindung durch eine Vorrichtung zum Steuern einer Vielzahl von Aufladeeinrichtungen mit einer Vielzahl von ersten Aufladeeinrichtungen zum Aufladen einer Vielzahl von aufladbaren Lithiumbatterien und einer Vielzahl von zweiten Aufladeeinrichtungen zum Aufladen einer Vielzahl von aufladbaren Bleibatterien gelöst. Bei der Vorrichtung kann es sich um eine Datenverarbeitungsvorrichtung handeln, beispielsweise einen Industrie-PC, einen Server oder eine andere zentrale Steuereinheit. Die erfindungsgemäße Vorrichtung gemäß dem ersten Aspekt umfasst eine Kommunikationsschnittstelle, welche ausgebildet ist, von jeder mit einer jeweiligen Batterie (d.h. Lithiumbatterie oder Bleibatterie) elektrisch verbundenen Aufladeeinrichtung über eine jeweilige Datenverbindung Statusinformationen über einen Aufladestatus der Aufladeeinrichtung zu empfangen. Ferner umfasst die erfindungsgemäße Vorrichtung eine Prozessoreinrichtung, welche ausgebildet ist, Steuerungsdaten für die Vielzahl von Aufladeeinrichtungen zu generieren, wobei die Steuerungsdaten ausgebildet sind, den Aufladevorgang einer jeweiligen Aufladeeinrichtung zu steuern, d.h. zu konfigurieren oder anzupassen. Dabei ist die Prozessoreinrichtung ausgebildet, die Steuerungsdaten für die Vielzahl von ersten Aufladeeinrichtungen (hierin auch als LIB-Aufladeeinrichtungen bezeichnet) auf der Grundlage der Statusinformationen der Vielzahl von zweiten Aufladeeinrichtungen (hierin auch als LAB-Aufladeeinrichtungen bezeichnet) und ggf. der Statusinformationen der Vielzahl von ersten Aufladeeinrichtungen zu generieren. Mit anderen Worten: die Prozessoreinrichtung der Vorrichtung ist ausgebildet, die ersten Aufladeeinrichtungen, d.h. die Aufladeeinrichtungen zum Aufladen der Vielzahl von aufladbaren Lithiumbatterien, auf der Grundlage der Statusinformationen der Vielzahl von zweiten Aufladeeinrichtungen zu steuern, d.h. der Aufladeeinrichtungen zum Aufladen der Vielzahl von aufladbaren Bleibatterien. Die Kommunikationsschnittstelle der Vorrichtung ist ferner ausgebildet, die Steuerungsdaten an die Vielzahl von Aufladeeinrichtungen zu übertragen, um die Vielzahl von Aufladeeinrichtungen gemäß den Steuerungsdaten zu steuern, d.h. zu konfigurieren oder anzupassen.

Die erfindungsgemäße Vorrichtung erlaubt dank der Steuerung der Aufladeeinrichtungen für die Lithiumbatterien auf der Grundlage der Statusinformationen der Aufladeeinrichtungen für die Bleibatterien (und ggf. der Statusinformationen der Aufladeeinrichtungen für die Lithiumbatterien) eine besonders effiziente Nutzung der Vielzahl von Aufladeeinrichtungen. Beispielsweise kann die erfindungsgemäße Vorrichtung gemäß dem ersten Aspekt mittels der Steuerungsdaten, eine Aufladung der Bleibatterien durch die LAB-Aufladeeinrichtungen nach normativen Ladekurven bestimmen, die von den LAB-Aufladeeinrichtungen umgesetzt werden. Dadurch kann eine Abweichung von den normativen Ladekurven (beispielsweise durch eine Änderung des Ladestroms oder ein Abrechen des Ladevorgangs) verhindert werden, da eine derartige Abweichung zu einer Verminderung der Lebensdauer der entsprechenden Bleibatterie führen könnte.

Gemäß einer Ausführungsform sind die von der erfindungsgemäßen Vorrichtung generierten Steuerungsdaten ferner ausgebildet, eine oder mehrere Aufladeeinrichtungen der Vielzahl von Aufladeeinrichtungen für einen oder mehrere anstehende Aufladevorgänge zu konfigurieren, wodurch der Betrieb der Vielzahl von Aufladeeinrichtungen effizient geplant werden kann.

In einer Ausführungsform ist die Kommunikationsschnittstelle der erfindungsgemäßen Vorrichtung ausgebildet, in zeitlichen Abständen oder in Reaktion auf ein definiertes Ereignis, von jeder mit einer jeweiligen Batterie elektrisch verbundenen Aufladeeinrichtung (d.h. LIB-Aufladeeinrichtungen und LAB-Aufladeeinrichtungen) über eine jeweilige Datenverbindung die Statusinformationen über den Aufladestatus der jeweiligen Aufladeeinrichtung abzufragen und/oder zu empfangen. Beispielsweise kann die jeweilige Datenverbindung durch einen Kommunikationsbus (insbesondere CAN-Bus), eine Ethernet-Verbindung oder eine drahtlose Funkverbindung bereitgestellt werden. Hierdurch wird ein effizienter Datenaustusch zwischen der erfindungsgemäßen Vorrichtung und den Aufladeeinrichtungen ermöglicht. Bei der fortlaufenden Überprüfung der Aktivität der Aufladeeinrichtungen durch die Vorrichtung kann es sich sowohl um einen "Pull-Vorgang", der von der Vorrichtung ausgeht, als auch um einen "Push-Vorgang" handeln, der von der jeweiligen Aufladeeinrichtung ausgeht. Beispielsweise können die Statusinformationen über die jeweilige Datenverbindung in festgelegten Zeitabständen automatisch von den Aufladeeinrichtungen als Push-Nachrichten an die Vorrichtung geschickt werden. Alternativ oder zusätzlich können die Statusinformationen von der Vorrichtung aktiv per Pull-Anfrage an die Aufladeeinrichtungen ausgelesen werden.

In einer Ausführungsform umfassen die Statusinformationen über den Aufladestatus einer Aufladeeinrichtung Informationen im Wesentlichen über einen Aufladestrom, eine Aufladespannung, eine Aufladeleistung, einen Aufladefüllstand der Batterie (auch als "State of Charge, SoC" bezeichnet), eine Seriennummer der Batterie, eine Seriennummer eines Flurförderzeug, mit der die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallladeleistung (die bei Ausfall der zentralen Steuereinrichtung greift) der Aufladeeinrichtung.

Gemäß einer Ausführungsform sind die Steuerungsdaten ausgebildet, den Aufladevorgang einer jeweiligen Aufladeeinrichtung dadurch zu steuern, dass ein Aufladestrom, eine Aufladespannung, eine Aufladeleistung, eine Rückfallladeleistung, ein Aufladestartzeitpunkt, ein Aufladeendzeitpunkt, eine Gesamtaufladezeitdauer und/oder eine verbleibende Aufladezeitdauer des Aufladevorgangs der Aufladeeinrichtung konfiguriert oder angepasst wird.

In einer Ausführungsform ist die Prozessoreinrichtung ferner ausgebildet, jeder Batterie der Vielzahl von Batterien und/oder jeder Aufladeeinrichtung der Vielzahl von Aufladeeinrichtungen eine Aufladepriorität einer Vielzahl von möglichen Aufladeprioritäten zuzuweisen und die Steuerungsdaten für die Vielzahl von ersten Aufladeeinrichtungen auf der Grundlage der Statusinformationen der Vielzahl von zweiten Aufladeeinrichtungen und der jeweiligen Aufladepriorität zu generieren. Vorteilhafterweise kann die erfindungsgemäße Vorrichtung hierdurch die Aufladevorgänge von Batterien und/oder Aufladeeinrichtungen mit unterschiedlichen Aufladeprioritäten effizient steuern. Die jeweilige Aufladepriorität kann von der Vorrichtung beispielsweise für einzelne Aufladeeinrichtungen und/oder Batterien festgelegt werden und zusätzlich auch von anderen Größen wie dem Ladefüllstand der Batterie (auch als "State of Charge, SOC" bezeichnet) abhängig sein. Die Prioritätsfestlegung und dessen Kombinatorik kann von der Vorrichtung (beispielsweise durch einen Benutzer) konfiguriert werden. Falls keine Priorität festgelegt wird, kann eine Standardpriorität verwendet werden.

Gemäß einer Ausführungsform ist die Prozessoreinrichtung ausgebildet, die Steuerungsdaten für die Vielzahl von ersten Aufladeeinrichtungen mit einer jeweiligen Aufladepriorität auf der Grundlage der Statusinformationen der Vielzahl von zweiten Aufladeeinrichtungen und der Statusinformationen der Vielzahl von ersten Aufladeeinrichtungen mit derselben Aufladepriorität zu generieren.

In einer Ausführungsform, bei der für das Aufladen der Vielzahl von Batterien eine maximale Gesamtaufladeleistung zur Verfügung steht, ist die Prozessoreinrichtung ausgebildet, die Steuerungsdaten für die Vielzahl von Aufladeeinrichtungen derart zu generieren, dass zunächst ein Teil der maximalen Gesamtaufladeleistung auf die Vielzahl von zweiten Aufladeeinrichtungen zum Aufladen der Vielzahl von aufladbaren Bleibatterien aufgeteilt wird, wobei jede der Vielzahl von zweiten Aufladeeinrichtungen eine als konstant angenommene Aufladeleistung aufweist oder die individuellen aktuellen Aufladeleistung der jeweiligen Aufladeeinrichtungen dynamisch erfasst werden, und anschließend ein verbleibender Teil der Gesamtaufladeleistung auf die Vielzahl von ersten Aufladeeinrichtungen zum Aufladen der Vielzahl von aufladbaren Lithiumbatterien aufgeteilt wird, wobei jede der Vielzahl von ersten Aufladeeinrichtungen eine variable Aufladeleistung hat.

Die vorstehend genannte Aufgabe wird gemäß einem zweiten Aspekt der Erfindung durch ein Verfahren zum Steuern einer Vielzahl von Aufladeeinrichtungen mit einer Vielzahl von ersten Aufladeeinrichtungen zum Aufladen einer Vielzahl von aufladbaren Lithiumbatterien und einer Vielzahl von zweiten Aufladeeinrichtungen zum Aufladen einer Vielzahl von aufladbaren Bleibatterien gelöst. Dabei umfasst das Verfahren die folgenden Schritte:

Empfangen von Statusinformationen über einen Aufladestatus einer jeweiligen mit einer Batterie elektrisch verbundenen Aufladeeinrichtung über eine jeweilige Datenverbindung;
Generieren von Steuerungsdaten für die Vielzahl von Aufladeeinrichtungen, wobei die Steuerungsdaten ausgebildet sind, den Aufladevorgang einer jeweiligen Aufladeeinrichtung zu steuern, d.h. zu konfigurieren oder anzupassen, wobei die Steuerungsdaten für die Vielzahl von ersten Aufladeeinrichtungen auf der Grundlage der Statusinformationen der Vielzahl von zweiten Aufladeeinrichtungen und ggf. der Statusinformationen der Vielzahl von ersten Aufladeeinrichtungen generiert werden; und
Übertragen der Steuerungsdaten an die Vielzahl von Aufladeeinrichtungen.

Das Verfahren gemäß dem zweiten Aspekt der Erfindung kann mittels der Vorrichtung gemäß dem ersten Aspekt der Erfindung durchgeführt werden. Daher ergeben sich weitere mögliche Ausführungsformen des Verfahrens gemäß dem zweiten Aspekt der Erfindung aus den vorstehend und nachstehend beschriebenen weiteren Ausführungsformen der Vorrichtung gemäß dem ersten Aspekt der Erfindung.

Gemäß einem dritten Aspekt der Erfindung wird ein System bereitgestellt, das eine Vielzahl von aufladbaren Lithiumbatterien und eine Vielzahl von aufladbaren Bleibatterien sowie eine Vielzahl von Aufladeeinrichtungen mit einer Vielzahl von ersten Aufladeeinrichtungen zum Aufladen der Vielzahl von aufladbaren Lithiumbatterien und einer Vielzahl von zweiten Aufladeeinrichtungen zum Aufladen der Vielzahl von aufladbaren Bleibatterien umfasst. Das System gemäß dem dritten Aspekt umfasst ferner eine Vorrichtung gemäß dem ersten Aspekt zum Steuern der Vielzahl von Aufladeeinrichtungen.

In einer Ausführungsform umfasst das System ferner eine Vielzahl von Flurförderzeugen, wobei die Vielzahl von aufladbaren Lithiumbatterien und die Vielzahl von aufladbaren Bleibatterien ausgebildet sind, die Vielzahl von Flurförderzeugen mit elektrischer Energie zu versorgen.

Gemäß einer Ausführungsform umfasst die Vielzahl von ersten Aufladeeinrichtungen und/oder die Vielzahl von zweiten Aufladeeinrichtungen eine oder mehrere stationäre Aufladeeinrichtungen und/oder eine oder mehrere Onboard-Aufladeeinrichtungen, welche an einem oder mehreren der Vielzahl von Flurförderzeugen angebracht sind, um die im Fahrzeug installierten Lithiumbatterien oder Bleibatterien aufzuladen.

In einer Ausführungsform sind die Aufladeeinrichtungen der Vielzahl von Aufladeeinrichtungen ausgebildet, mit einem Stromnetz verbunden zu werden und mit Wechselstrom und/oder Gleichstrom betrieben zu werden.

Gemäß einer Ausführungsform ist die Vorrichtung über eine Vielzahl von drahtgebundenen und/oder drahtlosen Datenverbindungen zumindest zeitweise mit der Vielzahl von Aufladeeinrichtungen verbunden.

In einer Ausführungsform umfasst das System ferner einen Datenkommunikationsbus, wobei die Vorrichtung über den Datenkommunikationsbus mit zumindest einigen der Vielzahl von Aufladeeinrichtungen verbunden ist, um die Steuerungsdaten zu übertragen.

In einer Ausführungsform umfasst das System eine Datenschnittstelle, wobei die Vorrichtung über die Datenschnittstelle einen Datentransport und eine Steuerungsmöglichkeit in bzw. aus einem Flottenmanagementsystem zur Datenvisualisierung und Systemkonfiguration aufweist. Ferner kann das System eine oder mehrere Datenschnittstellen zu einem externen Energiemanagementsystem und/oder einem oder mehreren Leistungsmessgeräten umfassen.

Weitere Vorteile und Einzelheiten der Erfindung werden beispielhaft anhand der in den schematischen Figuren dargestellten Ausführungsbeispielen näher erläutert. Hierbei zeigt:

Figur 1 eine schematische Darstellung eines erfindungsgemäßen Systems mit einer erfindungsgemäßen Vorrichtung zum Steuern einer Vielzahl von Aufladeeinrichtungen; und

Figur 2 ein Flussdiagramm, welches Schritte eines Verfahrens zum Steuern einer Vielzahl von Aufladeeinrichtungen gemäß einer Ausführungsform illustriert.

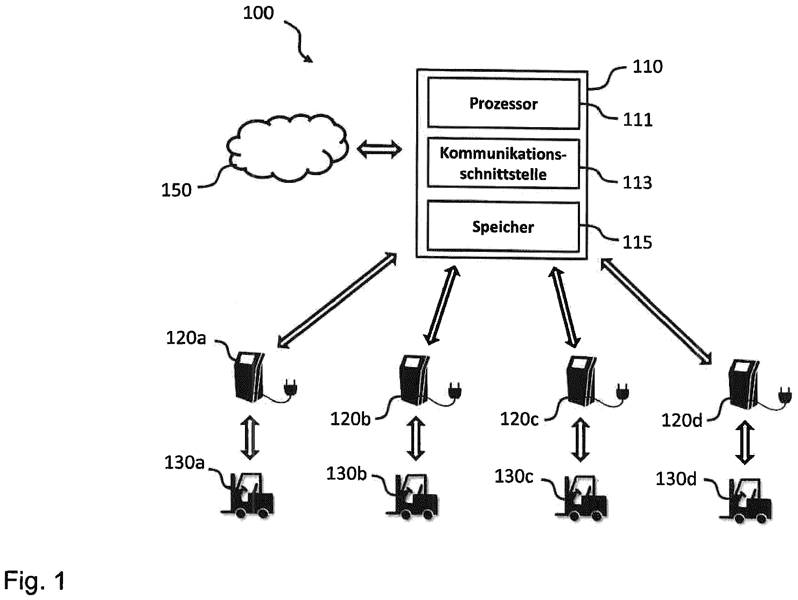

Figur 1 zeigt eine schematische Darstellung eines erfindungsgemäßen Systems 100 mit einer erfindungsgemäßen Vorrichtung, insbesondere Datenverarbeitungsvorrichtung 110 zum Steuern einer Vielzahl von Aufladeeinrichtungen 120a-d. Bei der in Figur 1 dargestellten Datenverarbeitungsvorrichtung 110 kann es sich beispielsweise um einen Industrie-PC, einen Server oder eine vergleichbare Datenverarbeitungseinrichtung zur zentralen Steuerung handeln. Die Vielzahl von Aufladeeinrichtungen 120a-d (auch als Ladestationen 120a-d bezeichnet) umfassen eine Vielzahl von ersten Aufladeeinrichtungen 120a,b (auch als LIB-Aufladeeinrichtungen bezeichnet, wobei LIB für "Li-Ion Battery" steht) zum Aufladen einer Vielzahl von aufladbaren Lithiumbatterien und eine Vielzahl von zweiten Aufladeeinrichtungen 120c,d (auch als LAB-Aufladeeinrichtungen bezeichnet, wobei LAB für "Lead-Acid Battery" steht) zum Aufladen einer Vielzahl von aufladbaren Bleibatterien. Dabei können, wie in der Ausführungsform von Figur 1 dargestellt, die Vielzahl von Batterien jeweils Teil eines elektrisch betriebenen Flurförderzeugs 130a-d, beispielsweise eines Gabelstaplers 130a-d sein. In einer Ausführungsform können die Batterien jeweils ein Batteriemanagement-System (BMS) umfassen, welches ausgebildet ist, mit der jeweiligen Aufladeeinrichtung 120a-d zu kommunizieren, beispielsweise um aktuelle Messwerte und/oder erfasste Historiendaten der jeweiligen Aufladeeinrichtung 120a-d bereitzustellen.

Gemäß einer Ausführungsform können die LIB-Aufladeeinrichtungen 120a,b und/oder die LAB-Aufladeeinrichtungen 120c,d eine oder mehrere stationäre Aufladeeinrichtungen und/oder eine oder mehrere Onboard-Aufladeeinrichtungen umfassen, welche an einem oder mehreren der Vielzahl von Flurförderzeugen 130a-d angebracht sind, um die im Flurförderzeug installierte Lithiumbatterie oder Bleibatterie aufzuladen. Die Vielzahl von Aufladeeinrichtungen 120a-d sind ausgebildet, mit einem Stromnetz verbunden zu werden und können mit Wechselstrom und/oder Gleichstrom betrieben werden.

Wie in Figur 1 angedeutet, kann das System 100 bzw. die Vorrichtung 110 ferner eine Datenschnittstelle aufweisen, um über diese Datenschnittstelle einen Datentransport und eine Steuerungsmöglichkeit in bzw. aus einem Flottenmanagementsystem 150 zur Datenvisualisierung und Systemkonfiguration zu ermöglichen. Ferner kann das System 100 eine oder mehrere Datenschnittstellen zu einem externen Energiemanagementsystem und/oder einem oder mehreren Leistungsmessgeräten umfassen.

Wie in Figur 1 dargestellt, umfasst die Vorrichtung 110 eine Kommunikationsschnittstelle 113, welche ausgebildet ist, von jeder mit einer jeweiligen Batterie elektrisch verbundenen Aufladeeinrichtung 120a-d über eine jeweilige Datenverbindung Statusinformationen über einen Aufladestatus der jeweiligen Aufladeeinrichtung 120a-d zu empfangen. Gemäß einer Ausführungsform kann die Kommunikationsschnittstelle 113 der Vorrichtung 110 eine Schnittstelle 113 für einen Kommunikationsbus, beispielsweise CAN-Bus, eine Ethernet-Verbindung und/oder eine drahtlose Funkverbindung umfassen.

Ferner umfasst die erfindungsgemäße Vorrichtung 110 eine Prozessoreinrichtung 111, welche ausgebildet ist, Steuerungsdaten für die Vielzahl von Aufladeeinrichtungen 120a-d zu generieren, um den Aufladevorgang einer jeweiligen Aufladeeinrichtung 120a-d zu steuern, d.h. zu konfigurieren oder anzupassen. Die Prozessoreinrichtung 111 kann beispielsweise einen oder mehrere Prozessoren, Mikroprozessoren oder CPUs umfassen. Die Vorrichtung 110 kann ferner einen nichtflüchtigen Speicher 115 umfassen. Der nichtflüchtige Speicher 115 kann ausgebildet sein, Daten und ausführbaren Programmcode zu speichern, der, wenn von der Prozessoreinrichtung 111 der Vorrichtung 110 ausgeführt, die Prozessoreinrichtung 111 veranlasst, die im Folgenden beschriebenen Funktionen, Operationen und Verfahren durchzuführen.

Wie dies nachstehend im Detail beschrieben wird, ist die Prozessoreinrichtung 111 der Vorrichtung erfindungsgemäß ausgebildet, die Steuerungsdaten für die Vielzahl von ersten Aufladeeinrichtungen 120a,b auf der Grundlage der Statusinformationen der Vielzahl von zweiten Aufladeeinrichtungen 120c,d und ggf. der Statusinformationen der Vielzahl von ersten Aufladeeinrichtungen 120a,b zu generieren. Mit anderen Worten: die Prozessoreinrichtung 111 der erfindungsgemäßen Vorrichtung 110 ist ausgebildet, die ersten Aufladeeinrichtungen 120a,b, d.h. die Aufladeeinrichtungen 120a,b zum Aufladen der Vielzahl von aufladbaren Lithiumbatterien, auf der Grundlage der Statusinformationen der Vielzahl von zweiten Aufladeeinrichtungen 120c,d zu steuern, d.h. der Aufladeeinrichtungen 120c,d zum Aufladen der Vielzahl von aufladbaren Bleibatterien. Die Kommunikationsschnittstelle 113 der Vorrichtung 110 ist ferner ausgebildet, die Steuerungsdaten an die Vielzahl von Aufladeeinrichtungen 120a-d zu übertragen, um die Vielzahl von Aufladeeinrichtungen 120a-d gemäß den Steuerungsdaten zu steuern, d.h. zu konfigurieren oder anzupassen. In einer Ausführungsform kann die erfindungsgemäße Vorrichtung 110 mittels der Steuerungsdaten, eine Aufladung der Bleibatterien durch die LAB-Aufladeeinrichtungen 120c,d nach normativen Ladekurven bestimmen, die von den LAB-Aufladeeinrichtungen 120c,d umgesetzt werden. Dadurch kann eine Abweichung von den normativen Ladekurven (beispielsweise durch eine Änderung des Ladestroms oder ein Abrechen des Ladevorgangs) verhindert werden, da eine derartige Abweichung zu einer Verminderung der Lebensdauer der entsprechenden Bleibatterie führen könnte.

In einer Ausführungsform ist die Kommunikationsschnittstelle 113 der erfindungsgemäßen Vorrichtung 110 ausgebildet, in zeitlichen Abständen oder in Reaktion auf ein definiertes Ereignis, von jeder mit einer jeweiligen Batterie elektrisch verbundenen Aufladeeinrichtung 120a-d (d.h. LIB-Aufladeeinrichtungen 120a,b und LAB-Aufladeeinrichtungen 120c,d) über eine jeweilige Datenverbindung die Statusinformationen über den Aufladestatus der jeweiligen Aufladeeinrichtung 120a-d abzufragen und/oder zu empfangen. Wie bereits vorstehend beschrieben, kann die jeweilige Datenverbindung beispielsweise durch einen Kommunikationsbus, insbesondere einen CAN-Bus, eine Ethernet-Verbindung oder eine drahtlose Funkverbindung bereitgestellt werden. Hierdurch wird ein effizienter Datenaustausch zwischen der erfindungsgemäßen Vorrichtung 110 und den Aufladeeinrichtungen 120a-d ermöglicht. Bei der fortlaufenden Überprüfung der Aktivität der Aufladeeinrichtungen 120a-d durch die Vorrichtung 110 kann es sich sowohl um einen "Pull-Vorgang", der von der Vorrichtung ausgeht 110, als auch um einen "Push-Vorgang" handeln, der von der jeweiligen Aufladeeinrichtung 120a-d ausgeht. Beispielsweise können die Statusinformationen über die jeweilige Datenverbindung in festgelegten Zeitabständen automatisch von den Aufladeeinrichtungen 120a-d als Push-Nachrichten an die Vorrichtung 110 geschickt werden. Alternativ oder zusätzlich können die Statusinformationen von der Vorrichtung 110 über die Kommunikationsschnittstelle 113 aktiv per Pull-Anfrage an die Aufladeeinrichtungen 120a-d ausgelesen werden. Mit anderen Worten: in einer Ausführungsform ist die Kommunikationsschnittstelle 113 ausgebildet, in zeitlichen Abständen oder in Reaktion auf ein definiertes Ereignis, von jeder mit einer jeweiligen Batterie elektrisch verbundenen Aufladeeinrichtung 120a-d über eine jeweilige Datenverbindung die Statusinformationen über den Aufladestatus der Aufladeeinrichtung 120a-d bzw. der mit der jeweiligen Aufladeeinrichtung 120a-d verbundenen Batterie abzufragen und/oder zu empfangen.

Die Statusinformationen über den Aufladestatus einer Aufladeeinrichtung 120a-d bzw. der entsprechenden Batterie können Informationen über beispielsweise einen Aufladestrom, eine Aufladespannung, eine Aufladeleistung, einen Aufladefüllstand der Batterie (SoC = State of Charge), eine Seriennummer der Batterie, eine Seriennummer des Flurförderzeugs 130a-d, mit der die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallladeleistung (die bei Ausfall der zentralen Steuereinrichtung greift) der jeweiligen Aufladeeinrichtung 120a-d umfassen.

Dementsprechend kann die Vorrichtung 110 ausgebildet sein, die Steuerungsdaten derart zu generieren, dass ein Aufladestrom, eine Aufladespannung, eine Aufladeleistung, eine Rückfallladeleistung, ein Aufladestartzeitpunkt, ein Aufladeendzeitpunkt, eine Gesamtaufladezeitdauer und/oder eine verbleibende Aufladezeitdauer des Aufladevorgangs der jeweiligen Aufladeeinrichtung 120a-d konfiguriert oder angepasst wird.

Die Leistungssteuerung der Aufladeeinrichtungen 120a-d mittels der von der Vorrichtung 110 generierten Steuerungsdaten kann beispielsweise derart erfolgen, dass der Ladevorgang der LAB-Aufladeeinrichtungen 120c,d mit einer konstanten Maximalleistung berücksichtigt wird (die im Verlauf des Ladevorgangs zeitlich schwanken kann und von der Ladecharakteristik der jeweiligen Batterie abhängt). Alternativ kann die Leistung mittels der Statusinformationen zyklisch neu bzw. dynamisch von der Vorrichtung 110 erfasst werden und entsprechend bei der Leistungssteuerung der LIB-Aufladeeinrichtungen 120a,b berücksichtigt werden.

In einer Ausführungsform ist die Prozessoreinrichtung 111 der Vorrichtung 110 ausgebildet, jeder Batterie der Vielzahl von Batterien und/oder jeder Aufladeeinrichtung der Vielzahl von Aufladeeinrichtungen 120a-d eine Aufladepriorität (beispielsweise Priorität 1, 2, 3, 4 oder 5) einer Vielzahl von möglichen Aufladeprioritäten zuzuweisen und die Steuerungsdaten für die Vielzahl von LIB-Aufladeeinrichtungen 120a,b auf der Grundlage der Statusinformationen der Vielzahl von LAB-Aufladeeinrichtungen 120c,d und der jeweiligen Aufladepriorität zu generieren. Vorteilhafterweise kann die erfindungsgemäße Vorrichtung 110 hierdurch die Aufladevorgänge von Batterien und/oder Aufladeeinrichtungen 120a-d mit unterschiedlichen Aufladeprioritäten effizient steuern. Die jeweilige Aufladepriorität kann von der Vorrichtung 110 beispielsweise für einzelne Aufladeeinrichtungen 120a-d und/oder Batterien festgelegt werden und zusätzlich auch von anderen Größen wie dem Ladefüllstand der Batterie (auch als "State of Charge, SOC" bezeichnet) abhängig sein. Die Prioritätsfestlegung und dessen Kombinatorik kann von der Vorrichtung 110 (beispielsweise durch einen Benutzer) konfiguriert werden. Falls keine Priorität festgelegt wird, kann eine Standardpriorität verwendet werden.

Gemäß einer Ausführungsform ist die Prozessoreinrichtung 111 der Vorrichtung 110 ferner ausgebildet, die Steuerungsdaten für die Vielzahl von LIB-Aufladeeinrichtungen 120a,b mit einer jeweiligen Aufladepriorität auf der Grundlage der Statusinformationen der Vielzahl von LAB-Aufladeeinrichtungen 120c,d und der Statusinformationen der Vielzahl von LIB-Aufladeeinrichtungen 120a,b mit derselben Aufladepriorität zu generieren. In einer Ausführungsform, bei der für das Aufladen der Vielzahl von Batterien eine maximale Gesamtaufladeleistung zur Verfügung steht, ist die Prozessoreinrichtung 111 der Vorrichtung 110 ausgebildet, die Steuerungsdaten für die Vielzahl von Aufladeeinrichtungen 120a-d derart zu generieren, dass zunächst ein Teil der maximalen Gesamtaufladeleistung auf die Vielzahl von LAB-Aufladeeinrichtungen 120c,d zum Aufladen der Vielzahl von aufladbaren Bleibatterien aufgeteilt wird. Dabei kann jede der Vielzahl von LAB-Aufladeeinrichtungen 120c,d eine als konstant angenommene Aufladeleistung aufweisen oder die individuelle aktuelle Aufladeleistung der jeweiligen Aufladeeinrichtung 120c,d kann dynamisch erfasst werden. Anschließend kann ein verbleibender Teil der Gesamtaufladeleistung auf die Vielzahl von LIB-Aufladeeinrichtungen 120a,b zum Aufladen der Vielzahl von aufladbaren Lithiumbatterien aufgeteilt werden, wobei jede der Vielzahl von LIB-Aufladeeinrichtungen 120a,b eine variable Aufladeleistung haben kann.

Im Folgenden wird ein detailliertes Ausführungsbeispiel der durch die Prozessoreinrichtung 111 der erfindungsgemäßen Vorrichtung 110 implementierten Steuerung der Aufladeeinrichtungen 120a,b für die Lithiumbatterien auf der Grundlage der Statusinformationen der Aufladeeinrichtungen 120c,d für die Bleibatterien und der Statusinformationen der Aufladeeinrichtungen 120a,b für die Lithiumbatterien beschrieben. Dabei werden die folgend aufgelisteten Parameter bzw. Variablen verwendet.

$P_{\text{Grid}}$ bezeichnet die vom Netzanschluss oder Netzbetreiber bereitgestellte bzw. physikalisch mögliche Leistung. Dabei kann es sich um die Wirkleistung, die Blindleistung, oder die Scheinleistung handeln. Diese Leistung wird in der Regel lokal durch die Verbindung zum elektrischen Netz bestimmt (beispielsweise durch die Netzverbindungskapazität, die Scheinleistung von Transformatoren der Netzverbindung, einen Nennstrom von Kabeln, Sicherungen und anderen elektrischen Leistungsvorrichtungen). Die vom Netzbetreiber bereitgestellte Leistung sollte nicht überschritten werden, um eine Beschädigung von Sicherungen und/oder eine Überlastung der Netzausrüstung (Kabel und dergleichen) zu vermeiden.

$n_{\text{Chargers}}$ steht für die Gesamtanzahl der Aufladeeinrichtungen 120a-d im System 100. Dieser Wert kann die Gesamtanzahl aller Aufladeeinrichtungen 120a-d, der LIB-Aufladeeinrichtungen 120a,b oder der LAB-Aufladeeinrichtungen 120c,d bezeichnen. Dieser Wert ist in der Regel konstant, kann sich aber durch das Hinzufügen oder Entfernen von Aufladeeinrichtungen in das System 100 ändern.

$n_{active\text{Chargers}}$ steht für die Anzahl der Aufladeeinrichtungen 120a-d im System 100, welche momentan mit einer Batterie elektrisch verbunden, d.h. aktiv sind. Dieser Wert kann für alle Aufladeeinrichtungen 120a-d, die LIB-Aufladeeinrichtungen 120a,b und/oder die LAB-Aufladeeinrichtungen 120c,d im System 100 definiert werden. Dieser Wert ist in der Regel zeitlich variabel.

$P_{\text{min,Charger,i}}$ steht für eine Untergrenze (Minimum) für die tatsächliche Wechselstromwirkleistung, die für eine LIB-Aufladeeinrichtung 120a,b eingestellt werden kann. Ein entsprechender Wert kann auch für die Blindleistung, Nennleistung oder eine andere elektrischen Eigenschaft (z.B. den Wechselstrom) der Ladeeinrichtung 120a,b definiert werden.

$P_{\text{max,Charger,i}}$ steht für eine Obergrenze (Maximum) für die tatsächliche Wechselstromwirkleistung, die für eine LIB-Aufladeeinrichtung 120a,b eingestellt werden kann. Ein entsprechender Wert kann auch für die Blindleistung, Nennleistung oder eine andere elektrischen Eigenschaft (z.B. den Wechselstrom) der Ladeeinrichtung 120a,b definiert werden.

Die folgenden Berechnungsgrößen werden aus den vorstehend eingeführten Werten wie folgt ermittelt.

Leistungsverhältnis für jede LIB-Aufladeeinrichtung:

$$F_{min,max,Charger,i} = \frac{P_{min,Charger,i}}{P_{max,Charger,i}}.$$

Gesamtmaximalwirkleistung aller aktiven LIB-Aufladeeinrichtungen:

$$P_{max,active,Chargers} = \sum_{i=1}^{n_{active,Chargers}} P_{max,Charger,i}$$

Gesamtminimalwirkleistung aller aktiven LIB-Aufladeeinrichtungen:

$$P_{min,active,Chargers} = \max\left(F_{min,max,active\,Charger,i}\right) \cdot P_{max,active,Chargers}$$

Gesamtmaximalwirkleistung aller LIB-Aufladeeinrichtungen:

$$P_{max,Chargers} = \sum_{i=1}^{n_{Chargers}} P_{max,Charger,i}$$

Gesamtminimalwirkleistung aller LIB-Aufladeeinrichtungen:

$$P_{min,Chargers} = \max\left(F_{min,max,Charger,i}\right) \cdot P_{max,Chargers}$$

$P_{Limit,Global}$ steht für die maximale gesamte Wechselstromwirkleistung, d.h. für die summierte Wechselstromgesamtleistung aller aktiven Aufladeeinrichtungen, die im Rahmen des Lademanagements verteilt wird.

Randbedingungen für die Leistungszuweisung sind:

$$P_{Grid} > P_{min,Chargers}$$

$$P_{Grid} > P_{Limit,Global} > P_{min,active,Chargers}$$

$P_{charge,Charger,i}$ steht für die der i-ten LIB-Aufladeeinrichtung 120a,b momentan zugewiesene Wechselstromleistung, die durch die Prozessoreinrichtung 111 der Vorrichtung 110 gemäß den hierin beschriebenen Ausführungsformen bestimmt wird.

Skalierungsfaktor zur relativen Leistungszuweisung:

$$SF_{Global} = \frac{P_{Limit,Global}}{P_{max,active,Chargers}}$$

In einer ersten Phase ist die Prozessoreinrichtung 111 der Vorrichtung 110 ausgebildet, die Anzahl der aktiven Aufladeeinrichtungen 120a-d mit der Aufladepriorität x zu bestimmen:

$$n_{active,Chargers,Prio\_x}$$

In einer zweiten Phase ist die Prozessoreinrichtung 111 der Vorrichtung 110 ausgebildet, den Aufladevorgang der LAB-Aufladeeinrichtungen 120c,d mit Priorität x zu starten (sofern eine ausreichende Gesamtleistung zur Verfügung steht):

$$P_{LAB,charging,Chargers,Prio\_x}$$

In einer dritten Phase ist die Prozessoreinrichtung 111 der Vorrichtung 110 ausgebildet, die summierten Maximalleistungen von allen aktiven LIB-Aufladeeinrichtungen 120a,b mit Priorität x zu bestimmen:

$$P_{max,active,Chargers,Prio\_x} = \sum_{i=1}^{n_{active,ChargersPrio\_x}} P_{max,Charger,Prio\_x,i}$$

In einer vierten Phase ist die Prozessoreinrichtung 111 der Vorrichtung 110 ausgebildet, die abrufbare Leistung den LIB-Aufladeeinrichtungen 120a,b mit Priorität x zuzuweisen:

$$P_{Limit,Global,Prio\_x} = P_{Limit,Global} - P_{LAB,charging,Chargers,Prio\_x}$$

($P_{Limit,Global}$ wird für Priorität 1 verwendet und wird durch $P_{Limit,Global,Prio\_(x-1)}$ -$P_{max,active,Chargers,Prio\_(x-1)}$ für höhere Prioritäten ersetzt).

In einer fünften Phase ist die Prozessoreinrichtung 111 der Vorrichtung 110 ausgebildet, einen verteilten Aufladevorgang für alle Aufladeeinrichtungen 120a-d mit Aufladepriorität x auf der Grundlage des durch den folgenden Pseudo-Code definierten Algorithmus zu verwirklichen:

- 
$$SF_{Global,Prio\_x} = \frac{P_{Limit,Global,Prio\_x}}{P_{max,active,Chargers,Prio\_x}}$$

- Anwenden der Leistungsbeschränkungen auf alle Aufladeeinrichtungen 120a-d unter Verwendung von $SF_{Global,Prio\_x}$ (Beschränkung < 1, falls erforderlich)
- Durchlaufen einer Schleife über den Index i mit Startwert i=1, Schrittweite=1 und Endwert i=$n_{active,Chargers,Prio\_x}$

$$P_{charge,Charger,Prio\_x,i} = SF_{Global,Prio\_x} \cdot P_{max,Charger,Prio\_x,i}$$

Für die übrigen Prioritäten kann die Vorrichtung 110 entsprechend vorgehen, solange gilt:

$$P_{max,active,Chargers,Prio\_x} < P_{Limit,Global,Prio\_x}$$

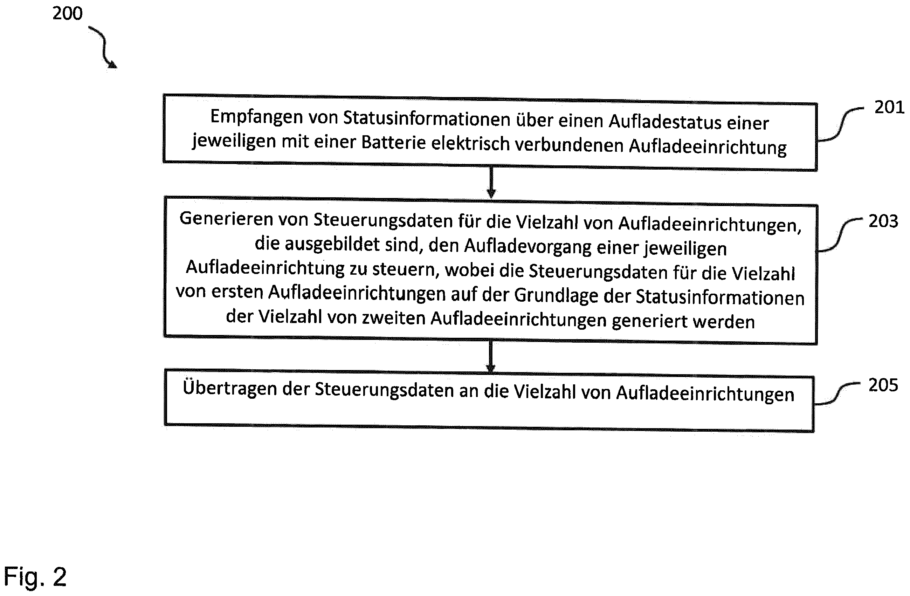

Figur 2 zeigt ein Flussdiagramm, welches Schritte eines Verfahrens 200 zum Steuern der Vielzahl von Aufladeeinrichtungen 120a-d mit der Vielzahl von ersten Aufladeeinrichtungen 120a,b zum Aufladen der Vielzahl von aufladbaren Lithiumbatterien und der Vielzahl von zweiten Aufladeeinrichtungen 120c,d zum Aufladen der Vielzahl von aufladbaren Bleibatterien illustriert. Das Verfahren 200 umfasst die folgenden Schritte:

Empfangen 201 von Statusinformationen über einen Aufladestatus der jeweiligen mit einer Batterie elektrisch verbundenen Aufladeeinrichtung 120a-d über eine jeweilige Datenverbindung;
Generieren 203 von Steuerungsdaten für die Vielzahl von Aufladeeinrichtungen 120a-d, wobei die Steuerungsdaten ausgebildet sind, den Aufladevorgang einer jeweiligen Aufladeeinrichtung 120a-d zu steuern, d.h. zu konfigurieren oder anzupassen, wobei die Steuerungsdaten für die Vielzahl von ersten Aufladeeinrichtungen 120a,b auf der Grundlage der Statusinformationen der Vielzahl von zweiten Aufladeeinrichtungen 120c,d und ggf. der Statusinformationen der Vielzahl von ersten Aufladeeinrichtungen 120a,b generiert werden; und
Übertragen 205 der Steuerungsdaten an die Vielzahl von Aufladeeinrichtungen 120a-d.

Das Verfahren 200 kann mittels der vorstehend im Detail beschriebenen Vorrichtung 110 durchgeführt werden. Daher ergeben sich weitere mögliche Ausführungsformen des Verfahrens 200 aus den vorstehend und nachstehend beschriebenen weiteren Ausführungsformen der Vorrichtung 110.

**Patentansprüche**

1. Vorrichtung (110) zum Steuern einer Vielzahl von Aufladeeinrichtungen (120a-d) mit einer Vielzahl von ersten Aufladeeinrichtungen (120a,b) zum Aufladen einer Vielzahl von aufladbaren Lithiumbatterien und einer Vielzahl von zweiten Aufladeeinrichtungen (120c,d) zum Aufladen einer Vielzahl von aufladbaren Bleibatterien, wobei die Vorrichtung (110) umfasst:

   eine Kommunikationsschnittstelle (113), welche ausgebildet ist, von jeder mit einer jeweiligen Batterie elektrisch verbundenen Aufladeeinrichtung (120a-d) über eine jeweilige Datenverbindung Statusinformationen über einen Aufladestatus der Aufladeeinrichtung (120a-d) zu empfangen; und
   eine Prozessoreinrichtung (111), welche ausgebildet ist, Steuerungsdaten für die Vielzahl von Aufladeeinrichtungen (120a-d) zu generieren, wobei die Steuerungsdaten ausgebildet sind, den Aufladevorgang einer jeweiligen Aufladeeinrichtung (120a-d) zu steuern, wobei die Prozessoreinrichtung (111) ausgebildet ist, die Steuerungsdaten für die Vielzahl von ersten Aufladeeinrichtungen (120a,b) auf der Grundlage der Statusinformationen der Vielzahl von zweiten Aufladeeinrichtungen (120c,d) zu generieren;
   wobei die Kommunikationsschnittstelle (113) ferner ausgebildet ist, die Steuerungsdaten an die Vielzahl von Aufladeeinrichtungen (120a-d) zu übertragen.

2. Vorrichtung (110) nach Anspruch 1, wobei die Steuerungsdaten ferner ausgebildet sind, eine oder mehrere Aufladeeinrichtungen (120a-d) der Vielzahl von Aufladeeinrichtungen (120a-d) für einen oder mehrere anstehende Aufladevorgänge zu konfigurieren.

3. Vorrichtung (110) nach Anspruch 1 oder 2, wobei die Kommunikationsschnittstelle (113) ausgebildet ist, in zeitlichen Abständen oder in Reaktion auf ein definiertes Ereignis, von jeder mit einer jeweiligen Batterie elektrisch verbundenen Aufladeeinrichtung (120a-d) über eine jeweilige Datenverbindung die Statusinformationen über den Aufladestatus der Aufladeeinrichtung (120a-d) abzufragen und/oder zu empfangen.

4. Vorrichtung (110) nach einem der vorstehenden Ansprüche, wobei die Statusinformationen über den Aufladestatus einer Aufladeeinrichtung (120a-d) Informationen über einen Aufladestrom, eine Aufladespannung, eine Aufladeleistung, einen Aufladefüllstand einer Batterie, eine Seriennummer einer Batterie, eine Seriennummer eines Flurförderzeugs (130a-d), mit dem die Batterie zuletzt verbunden war oder verbunden ist, einen Aufladestartzeitpunkt, einen Aufladeendzeitpunkt, eine Gesamtaufladezeitdauer, eine verstrichene Aufladezeitdauer, eine verbleibende Aufladezeitdauer, eine zulässige Maximalaufladespannung und/oder eine zulässige Minimalaufladespannung, eine zulässige Maximalaufladeleistung und/oder eine zulässige Minimalaufladeleistung, eine Rückfallladeleistung der Aufladeeinrichtung umfassen.

5. Vorrichtung (110) nach einem der vorstehenden Ansprüche, wobei die Steuerungsdaten ausgebildet sind, den Aufladevorgang einer jeweiligen Aufladeeinrichtung (120a-d) dadurch zu steuern, dass ein Aufladestrom, eine Aufladespannung, eine Aufladeleistung, eine Rückfallladeleistung, ein Aufladestartzeitpunkt, ein Aufladeendzeitpunkt, eine Gesamtaufladezeitdauer und/oder eine verbleibende Aufladezeitdauer des Aufladevorgangs der Aufladeeinrichtung (120a-d) konfiguriert oder angepasst wird.

6. Vorrichtung (110) nach einem der vorstehenden Ansprüche, wobei die Prozessoreinrichtung (111) ferner ausgebildet ist, jeder Batterie der Vielzahl von Batterien und/oder jeder Aufladeeinrichtung (120a-d) der Vielzahl von Aufladeeinrichtungen (120a-d) eine Aufladepriorität zuzuweisen und die Steuerungsdaten für die Vielzahl von ersten Aufladeeinrichtungen (120a,b) auf der Grundlage der Statusinformationen der Vielzahl von zweiten Aufladeeinrichtungen (120c,d) und der jeweiligen Aufladepriorität zu generieren.

7. Vorrichtung (110) nach Anspruch 6, wobei die Prozessoreinrichtung (111) ausgebildet ist, die Steuerungsdaten für die Vielzahl von ersten Aufladeeinrichtungen (120a,b) mit einer jeweiligen Aufladepriorität auf der Grundlage der Statusinformationen der Vielzahl von zweiten Aufladeeinrichtungen (120c,d) mit derselben Aufladepriorität zu generieren.

8. Vorrichtung (110) nach einem der vorstehenden Ansprüche, wobei für das Aufladen der Vielzahl von Batterien eine maximale Gesamtaufladeleistung zur Verfügung steht und wobei die Prozessoreinrichtung (111) ausgebildet ist, die Steuerungsdaten für die Vielzahl von Aufladeeinrichtungen (120a-d) derart zu generieren, dass ein Teil der maximalen Gesamtaufladeleistung auf die Vielzahl von zweiten Aufladeeinrichtungen (120c,d) zum Aufladen der Vielzahl von aufladbaren Bleibatterien aufgeteilt wird und ein verbleibender Teil der Gesamtaufladeleistung auf die Vielzahl von ersten Aufladeeinrichtungen (120a,b) zum Aufladen der Vielzahl von aufladbaren Lithiumbatterien aufgeteilt wird.

9. Vorrichtung (110) nach Anspruch 8, wobei jede der Vielzahl von zweiten Aufladeeinrichtungen (120c,d) eine als konstant angenommene Aufladeleistung aufweist und/oder die Aufladeleistung einer jeweiligen Aufladeeinrichtung der Vielzahl von zweiten Aufladeeinrichtungen (120c,d) dynamisch erfasst wird und wobei jede der Vielzahl von ersten Aufladeeinrichtungen (120a,b) eine variable Aufladeleistung hat.

10. Verfahren (200) zum Steuern einer Vielzahl von Aufladeeinrichtungen (120a-d) mit einer Vielzahl von ersten Aufladeeinrichtungen (120a,b) zum Aufladen einer Vielzahl von aufladbaren Lithiumbatterien und einer Vielzahl von zweiten Aufladeeinrichtungen (120c,d) zum Aufladen einer Vielzahl von aufladbaren Bleibatterien, wobei das Verfahren (200) umfasst:

Empfangen (201) von Statusinformationen über einen Aufladestatus einer jeweiligen mit einer Batterie elektrisch verbundenen Aufladeeinrichtung (120a-d) über eine jeweilige Datenverbindung;
Generieren (203) von Steuerungsdaten für die Vielzahl von Aufladeeinrichtungen (120a-d), wobei die Steuerungsdaten ausgebildet sind, den Aufladevorgang einer jeweiligen Aufladeeinrichtung (120a-d) zu steuern, wobei die Steuerungsdaten für die Vielzahl von ersten Aufladeeinrichtungen (120a,b) auf der Grundlage der Statusinformationen der Vielzahl von zweiten Aufladeeinrichtungen (120c,d) generiert werden; und
Übertragen (205) der Steuerungsdaten an die Vielzahl von Aufladeeinrichtungen (120a-d).

11. System (100), umfassend:

eine Vielzahl von aufladbaren Lithiumbatterien und eine Vielzahl von aufladbaren Bleibatterien;
eine Vielzahl von Aufladeeinrichtungen (120a-d) mit einer Vielzahl von ersten Aufladeeinrichtungen (120a,b) zum Aufladen der Vielzahl von aufladbaren Lithiumbatterien und einer Vielzahl von zweiten Aufladeeinrichtungen (120c,d) zum Aufladen der Vielzahl von aufladbaren Bleibatterien; und
eine Vorrichtung (100) nach einem der Ansprüche 1 bis 9 zum Steuern der Vielzahl von Aufladeeinrichtungen (120a-d).

12. System (100) nach Anspruch 11, wobei das System (100) ferner eine Vielzahl von Flurförderzeugen (130a-d) umfasst, wobei die Vielzahl von aufladbaren Lithiumbatterien und die Vielzahl von aufladbaren Bleibatterien ausgebildet sind, die Vielzahl von Flurförderzeugen (130a-d) mit elektrischer Energie zu versorgen.

13. System (100) nach Anspruch 12, wobei die Vielzahl von ersten Aufladeeinrichtungen (120a,b) und die Vielzahl von zweiten Aufladeeinrichtungen (120c,d) eine oder mehrere stationäre Aufladeeinrichtungen und/oder eine oder mehrere Onboard-Aufladeeinrichtungen umfassen, welche an einem oder mehreren der Vielzahl von Flurförderzeugen (130a-d) angebracht sind, um die in einem jeweiligen Flurförderzeug (130a-d) installierte Batterie aufzuladen.

14. System (100) nach einem der Ansprüche 11 bis 13, wobei die Vielzahl von Aufladeeinrichtungen (120a-d) ausgebildet sind, mit einem Stromnetz verbunden zu werden und mit Wechselstrom und/oder Gleichstrom betrieben zu werden.

15. System (100) nach einem der Ansprüche 11 bis 14, wobei die Vorrichtung (110) über eine Vielzahl von drahtgebundenen und/oder drahtlosen Datenverbindungen zumindest zeitweise mit der Vielzahl von Aufladeeinrichtungen (120a-c) verbunden ist.

16. System (100) nach einem der Ansprüche 11 bis 15, wobei das System (100) ferner einen Datenkommunikationsbus umfasst, wobei die Vorrichtung (110) über den Datenkommunikationsbus mit zumindest einigen der Vielzahl von Aufladeeinrichtungen (120a-c) verbunden ist.

17. System (100) nach einem der Ansprüche 11 bis 16, wobei das System (100) ferner eine oder mehrere Datenschnittstellen zu einem externen Energiemanagementsystem und/oder einem oder mehreren Leistungsmessgeräten umfasst.

18. System (100) nach einem der Ansprüche 11 bis 17, wobei das System (100) ferner eine Datenschnittstelle zu einem Flottenmanagementsystem (150) zur Datenvisualisierung und/oder Systemkonfiguration aufweist.

100

110

Prozessor — 111

Kommunikationsschnittstelle — 113

Speicher — 115

150

120a

120b

120c

120d

130a

130b

130c

130d

Fig. 1

200

Empfangen von Statusinformationen über einen Aufladestatus einer jeweiligen mit einer Batterie elektrisch verbundenen Aufladeeinrichtung — 201

Generieren von Steuerungsdaten für die Vielzahl von Aufladeeinrichtungen, die ausgebildet sind, den Aufladevorgang einer jeweiligen Aufladeeinrichtung zu steuern, wobei die Steuerungsdaten für die Vielzahl von ersten Aufladeeinrichtungen auf der Grundlage der Statusinformationen der Vielzahl von zweiten Aufladeeinrichtungen generiert werden — 203

Übertragen der Steuerungsdaten an die Vielzahl von Aufladeeinrichtungen — 205

Fig. 2

Europäisches
Patentamt

European
Patent Office

Office européen
des brevets

**EUROPÄISCHER RECHERCHENBERICHT**

**Nummer der Anmeldung**

**EP 23 18 3257**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/144851 A1 (DELEVSKI DIMITAR [US]) 7. Mai 2020 (2020-05-07) | 1-5,8-18 | INV. H02J7/00 |
| Y | * Absätze [0001] – [0023], [0036] – [0064]; Abbildungen 1,2,3,7 * | 6,7 | |
| X | US 2008/122400 A1 (KUBOTA ATSUMASA [JP] ET AL) 29. Mai 2008 (2008-05-29) | 1,10,11 | |
| Y | * Absätze [0010], [0062] – [0130]; Abbildungen 1,8,9 * | 6,7 | |
| X | EP 3 823 129 B1 (SAMSUNG SDI CO LTD [KR]) 6. April 2022 (2022-04-06) * Absätze [0003], [0013] – [0015], [0032] – [0074]; Abbildungen 1,2,3,5 * | 1,10,11 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 11. Januar 2024 | Bergler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 3257

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2024

| Im Recherchenbericht angeführtes Patentdokument | Datum der Veröffentlichung | Mitglied(er) der Patentfamilie | | Datum der Veröffentlichung |
|---|---|---|---|---|
| US 2020144851 A1 | 07-05-2020 | CA | 3036785 A1 | 05-05-2020 |
| | | GB | 2578801 A | 27-05-2020 |
| | | SG | 10201902281U A | 29-06-2020 |
| | | US | 2020144851 A1 | 07-05-2020 |
| US 2008122400 A1 | 29-05-2008 | CN | 101192758 A | 04-06-2008 |
| | | EP | 1926195 A2 | 28-05-2008 |
| | | JP | 2008136278 A | 12-06-2008 |
| | | US | 2008122400 A1 | 29-05-2008 |
| EP 3823129 B1 | 06-04-2022 | CN | 112803584 A | 14-05-2021 |
| | | EP | 3823129 A1 | 19-05-2021 |
| | | HU | E059224 T2 | 28-10-2022 |
| | | KR | 20210058206 A | 24-05-2021 |
| | | PL | 3823129 T3 | 20-06-2022 |
| | | TW | 202119225 A | 16-05-2021 |
| | | US | 2021143648 A1 | 13-05-2021 |

EPO FORM P0461

Für nähere Einzelheiten zu diesem Anhang : siehe Amtsblatt des Europäischen Patentamts, Nr.12/82